# EUROPÄISCHE PATENTSCHRIFT

(11) **EP 0 608 793 B1**
(45) Veröffentlichungstag und Bekanntmachung des Hinweises auf die Patenterteilung: **24.11.1999**
(21) Anmeldenummer: 94100928.4
(22) Anmeldetag: 22.01.1994
(51) Int. Cl.: G01F 1/58

(54) **Magnetisch-induktiver Durchflussmesser**
Electric flowmeter
Débitmètre électromagnétique

(30) Priorität: 27.01.1993 DE 4302158
(43) Veröffentlichungstag der Anmeldung: 03.08.1994
(73) Patentinhaber: TURBO-WERK Messtechnik GmbH, D-51105 Köln (DE)
(72) Erfinder: Vogel, Otto, D-51149 Köln (DE); Lang, Michael P., Dr., D-51105 Köln (DE)
(74) Vertreter: Selting, Günther, Dipl.-Ing.

(56) Entgegenhaltungen:
- GB-A- 2 047 409
- GB-A- 2 232 257
- US-A- 4 388 834
- PATENT ABSTRACTS OF JAPAN vol. 4 no. 151 (C-028) ,23.Oktober 1980 & JP-A-55 097276 (NIPPON VALQUA IND. LTD.)
- PATENT ABSTRACTS OF JAPAN vol. 11 no. 216 (P-595) [2663] ,14.Juli 1987 & JP-A-63 035224 (YOKOGAWA ELECTRIC CORP.)

## Beschreibung

Die Erfindung betrifft einen magnetisch-induktiven Durchflußmesser nach dem Oberbegriff des Patentanspruchs 1.

Zur Messung des Durchflusses von Flüssigkeiten sind magnetisch-induktive Durchflußmesser bekannt. Die bekannten magnetisch-induktiven Durchflußmesser weisen einen Magnetkreis auf, der im Meßrohr, das von einer Flüssigkeit mit einer ausreichenden elektrischen Leitfähigkeit durchströmt wird, ein quer zur Längsachse des Meßrohrs gerichtetes Magnetfeld erzeugt.

Auf die Ladungsträger der elektrisch leitfähigen Flüssigkeit wirken im Meßrohr Kräfte, so daß im Meßrohr ein elektrisches Feld entsteht. In einer quer zum Magnetfeld sich erstreckenden Ebene sind zwei Elektroden vorgesehen, an denen die Meßspannung des magnetisch-induktiven Durchflußmessers abgegriffen wird. Diese Meßspannung ist dem Durchfluß, d.h. dem pro Zeiteinheit fließenden Flüssigkeitsvolumen, proportional.

Die Meßrohre bekannter Durchflußmesser bestehen aus Kunststoff, Keramik oder metallischen Werkstoffen. Als metallische Werkstoffe finden nicht-ferromagnetische Werkstoffe Verwendung, damit das durch den Magnetkreis erzeugte magnetische Feld nicht unerwünscht beeinflußt wird.

Bei magnetisch-induktiven Durchflußmessern mit metallischem Meßrohr ist die Innenwand des Meßrohrs zur Vermeidung von Nebenschlüssen mit einer elektrisch nicht-leitenden Auskleidung versehen. Die bekannten Durchflußmesser weisen Auskleidungen aus Hart- oder Weichgummi, Email, Gießharzen oder Teflon auf. Auch Kombinationen von Keramik- und Kunststoffauskleidungen finden Verwendung.

Auskleidungen aus Hart- oder Weichgummi sind nicht öl- und temperaturbestärdig und können so nicht als Auskleidungswerkstoff für magnetisch-induktive Durchflußmesser verwendet werden, die z.B. auf Bohrinseln zur Bestimmung des Durchflusses eines Öl-Wasser-Sand-Gemisches bei hohen Temperaturen, z.B. 120 °C, und hohen Drücken, z.B. 95 bar, eingesetzt werden.

Email-Auskleidungen werden durch Aufschmelzen anorganischer Massen (in der Hauptsache oxidischer Zusammensetzung) hergestellt. Enailierungen weisen gegenüber Stahl einen erheblich höheren Elastizitätsmodul und einen geringeren Wärmeausdehnungskoeffizienten auf, wodurch es bei Temperaturwechselbeanspruchungen zu Rißbildungen in der Auskleidung kommen kann. Nachteilig ist ebenfalls, daß das Meßrohr bei der Emailierung auf über 420 °C erhitzt werden muß.

Ein Meßrohr mit einer Auskleidung aus Gießharz ist aus US-A-4 499 754 bekannt. Nachteilig ist, daß die Auskleidung in mehrteiligen Formen mit eingelegtem Kern aufwendig herzustellen ist. Ein weiterer Nachteil besteht darin, daß die Auskleidung nicht an der Oberfläche des Meßrohrs haftet. Um einem betriebsbedingten Unterdruck standhalten zu können, muß die Auskleidung caher eine große Wandstärke haben.

Eine große Beständigkeit gegen chemische Einflüsse und gegen hohe Temperaturen bieten die bekannten Teflonauskleidungen (Teflon = eingetragenes Warenzeichen). Zur elektrischen Isolierung wird in das Meßrohr ein Teflonschlauch eingezogen und in einem thermischen Verfahren eingeformt. Da eine direkte Verbindung zwischen der Rohrwand und dem eingeformten Teflonschlauch nicht gegeben ist, besteht die Gefahr, daß sich die Teflonauskleidung infolge eines betriebsbedingten Unterdrucks von der Meßrohrwand löst. Der Unterdruck kann sogar zum Ausfall des Durchflußmessers führen. Teflonauskleidungen sind ferner aufwendig und camit teuer herzustellen. Auskleidungen aus Teflon weisen zwar im Gegensatz zu Weich- und Hartgummiauskleidungen eine höhere Temperaturbeständigkeit auf. Nachteilig ist aber, daß Teflon Wasser aufnimmt, so daß es bei Temperaturwechsel zu einer Blasen- oder Faltenbildung in der Auskleidung kommen kann.

Ferner finden Auskleidungen Verwendung, die aus einer keramischen Grundschicht und einer elektrisch isolierenden Deckschicht aus thermoplastischem Kunststoff bestehen. JP 62-35 224 beschreibt ein aus rostfreiem Stahl bestehendes Meßrohr, auf dessen Innenwandung eine keramische Grundschicht durch Plasmaspritzen aufgebracht ist. Die keramische Grundschicht ist mit einer Deckschicht aus Fluorpolymeren versehen, die durch Spritzen oder Sprühen aufgetragen und anschließend eingebrannt wird. Auch bei dieser Art der Auskleidung können Temperaturwechselbeanspruchungen zu Rissen in der keramischen Grundschicht führen. Da beim Aufbringen der keramischen Grundschicht durch den Plasmastrahl nur eine definierte Werkstückoberfläche beschichtet werden kann, sind plasmagespritzte Überzüge bei Meßrohren mit großer Nennweite teuer in der Herstellung. Meßrohre mit kleinen Nennweiten können dagegen, wegen unzureichender Zugänglichkeit, nicht durch Plasmaspritzen innenbeschichtet werden. Darüber hinaus macht der beim Plasmaspritzen auftretende Lärm und die hohe Staubbelastung durch nicht an der Oberfläche haftendes Pulver aufwendige Arbeitsschutzmaßnahmen erforderlich.

Der Erfindung liegt die Aufgabe zugrunde, einen magnetisch-induktiven Durchflußmesser zu schaffen, der gegenüber den bekannten magnetisch-induktiven Durchflußmessern einen erweiterten Einsatzbereich hat und kostengünstig herzustellen ist.

Die Lösung dieser Aufgabe erfolgt erfindungsgemäß mit den Merkmalen des Patentanspruchs 1.

Bei dem erfindungsgemäßen magnetisch-induktiven Durchflußmesser trägt die Innenwand des metallischen Meßrohrs zur Vermeidung von Nebenschlüssen eine isolierende Duplex-Schicht. Die Duplex-Schicht besteht aus einer Trägerschicht und einer Deckschicht, die je nach Einsatztemperatur auf Epoxydharz oder Phenolharz basiert.

Die Trägerschicht auf Phenolharzbasis dient als Haftgrund für die anschließend aufgetragene Deckschicht. Sie füllt die Oberflächenrauheiten der zu beschichtenden Meßrohrwand aus, wodurch eine glatte Rohrinnenwand entsteht. Ferner dient die Trägerschicht als Korrosionsschutz für das metallische Meßrohr, das nicht zwingend aus rostfreiem Stahl bestehen muß.

Die Deckschicht auf Epoxydharz- oder Phenolharzbasis hat eine hohe Abriebfestigkeit und eine hohe chemische Resistenz. Sie weist eine glatte und porenfreie Oberfläche auf. Damit werden Inkrustationen an der Meßrohrinnenwand vermieden.

Die Deckschicht kann in einem Arbeitsgang auch bei großen Meßrohren einfach und kostengünstig aufgebracht werden. Außerdem lassen sich auch Meßrohre mit kleinen Nennweiten ohne großen Aufwand beschichten.

Die nach einem Einbrennvorgang ausgehärtete Duplex-Schicht weist eine für nichtkeramische Auskleidungen hohe Temperaturbeständigkeit (bis 210 °C Dauerbelastung bei einer Deckschicht auf Phenolharzbasis und bis 170 °C bei einer Deckschicht auf Epoxydharzbasis) und einen hohen elektrischen Isolationswiderstand auf. Aus der guten Haftung der Träger- und Deckschicht auf dem jeweiligen Untergrund ergibt sich eine sehr gute Druckbeständigkeit (Vakuum bis 10⁸ Pa (1000 bar)) der Duplex-Schicht.

Da der Elastizitätsmodul der Duplex-Schicht niedriger ist als der des Meßrohrwerkstoffs, entstehen bei Temperaturänderungen trotz unterschiedlicher Wärmeausdehnungskoeffizienten keine Risse in der Auskleidung.

Vorzugsweise besteht die Deckschicht aus einem Pulver, das auf die Trägerschicht z.B. mit Hilfe einer Beschichtungslanze, Flockingpistole oder anderer Verfahren gleichmäßig aufgetragen wird und durch Erwärmung zu einem glatten Überzug verschmilzt.

Die Elektroden des magnetisch-induktiven Durchflußmessers sind zweckmäßigerweise in Ausnehmungen der Meßrohrwand sitzende Stabelektroden. Die Trennfuge zwischen Elektrode und Meßrohrwand.kann durch die isolierende Deckschicht ausgefüllt sein. Die Deckschicht isoliert die Stabelektroden elektrisch von dem metallischen Meßrohr und fixiert diese. Alternativ kann aber auch in der Trennfuge zwischen Elektrode und Meßrohr ein elektrisches Isolierstück vorgesehen sein. Dabei können die Ausnehmungen für die Elektrodenzuführungen erst nach dem Aufbringen der Duplex-Schicht eingebracht bzw. geöffnet werden oder bereits vorher vorhanden sein und mitbeschichtet werden.

Im folgenden werden unter Bezugnahme auf die Zeichnungen mehrere Ausführungsbeispiele der Erfindung näher erläutert.

Es zeigen:
- Fig. 1: einen Querschnitt durch den magnetisch-induktiven Durchflußmesser,
- Fig. 2: die mit der Duplex-Schicht ausgekleidete Innenwand des Meßrohrs,
- Fig. 3: die mit der Duplex-Schicht ausgekleidete Innenwand des Meßrohrs im Bereich der Elektrodendurchführung, wobei die Trennfuge zwischen Elektrode und Meßrohrwand durch die aufgebrachte Duplex-Schicht ausgefüllt ist,
- Fig. 4: die mit der Duplex-Schicht ausgekleidete Innenwand des Meßrohrs im Bereich der Elektrodendurchführung, wobei eine von innen eingesetzte ' Elektrode durch ein separates Isolierstück elektrisch von dem Meßrohr isoliert ist, und
- Fig. 5: die mit der Duplex-Schicht ausgekleidete Innenwand des Meßrohrs im Bereich der Elektrodendurchführung, wobei eine von außen auswechselbare Elektrode durch ein Isolierstück elektrisch von dem Meßrohr isoliert ist und die Duplex-Schicht sich an der Innenwand der Elektrodenausnehmung und des Ansatzstücks fortsetzt.

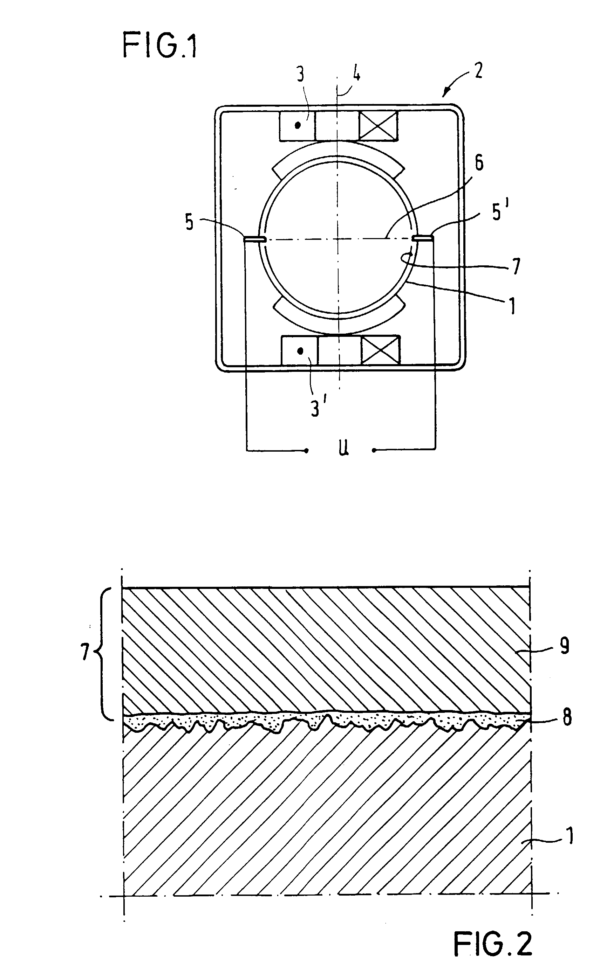

Fig. 1 zeigt einen Querschnitt durch den magnetisch-induktiven Durchflußmesser. Der Durchflußmesser weist ein Meßrohr 1 und einen Magnetkreis 2 mit den Spulen 3,3' auf. Die Spulen 3,3' sind entlang einer gemeinsamen Achse 4 auf entgegengesetzten Seiten des Meßrohrs 1 angeordnet, wobei die Spulenachse 4 die Längsachse des Rohrs rechtwinklig schneidet. Das Meßrohr besteht aus einem metallischen Werkstoff, z.B. austenitischem Stahl, mit einer sehr niedrigen magnetischen Leitfähigkeit. Der Magnetkreis erzeugt ein im wesentlichen senkrecht gerichtetes Magnetfeld, das das Meßrohr 1 durchsetzt.

An entgegengesetzten Seiten des Meßrohrs 1 sind Elektroden 5,5' angeordnet. An den Elektroden 5,5' kann die dem Durchfluß proportionale Meßspannung U abgegriffen werden. Die gemeinsame Achse 6 der Elektroden 5,5' verläuft rechtwinklig zur Rohrachse und rechtwinklig zur Spulenachse 4. Die Elektroden 5,5' sitzen in Ausnehmungen der Rohrwand und sind gegenüber dem aus einem metallischen Werkstoff bestehenden Meßrohr elektrisch isoliert. Die Innenwand des metallischen Meßrohrs ist zur Vermeidung von Nebenschlüssen mit einer Auskleidung versehen, die im einzelnen noch beschrieben wird.

Fig. 2 zeigt die mit der Duplex-Schicht 7 versehene Innenwand des Meßrohrs 1. Die elektrisch isolierende Duplex-Schicht 7 verhindert, daß die an den gegenüberliegenden Elektroden 5,5' anliegende Meßspannung durch Nebenschlüsse in der Rohrwand reduziert wird. Darüber hinaus wird durch die Beschichtung ein korrosiver, abrasiver und chemischer Angriff des metallischen Meßrohres verhindert.

Die Duplex-Schicht 7 besteht aus zwei unterschiedlichen Schichten. Die erste, direkt mit dem Metallmeßrohr in Berührung kommende Trägerschicht 8 auf Phenolharzbasis wird in flüssiger Form aufgetragen und hat nach dem Aushärten eine Schichtdicke von 10-20 µm, vorzugsweise 15 µm. Die Trägerschicht 8 füllt die Oberflächenrauheiten in der zu beschichtenden Meßrohrinnenwand aus und dient als Haftgrund für die durch Pulverbeschichten aufgebrachte Deckschicht 9, die auf Epoxydharz oder Phenolharz basiert. Die Deckschicht 9 auf Phenolharzbasis ist vorzugsweise ein Novolak (Phenolformaldehyd).

Die Schichtdicke der eingebrannten Deckschicht liegt typischerweise zwischen 200 und 300 µm. Die mittlere Oberflächenrauheit der Deckschicht beträgt ca. 2 µm.

Im folgenden wird das Verfahren zur Beschichtung der Rohrinnenwand im einzelnen beschrieben. Zunächst werden die zu beschichtenden Oberflächen, d.h. die Rohrinnenwand und gegebenenfalls die Wandung der Ausnehmungen entfettet und mittels Al₂O₃-Strahlmittel entrostet und aufgerauht. Anschließend werden die Teile durch Ausblasen mit öl- und feuchtigkeitsfreier Luft entstaubt. Daraufhin wird die porenschließende Trägerschicht auf Phenolharzbasis in flüssiger Form bei Raumtemperatur aufgetragen. Nach dem Trocknen der Trägerschicht wird das Meßrohr auf die Beschichtungstemperatur von etwa 150-180 °C erwärmt. Ein nun gleichmäßig auf die Trägerschicht aufgetragenes Pulver auf Epoxyd- oder Phenolharzbasis verschmilzt und bildet einen glatten, glänzenden Überzug. Das Pulver kann mit Hilfe einer Beschichtungslanze, Flockingpistole oder anderer Verfahren aufgetragen werden. Sind die Elektrodenausnehmungen bereits vor der Beschichtung eingebracht worden, so werden deren Innenkanten zur besseren Haftung mit einem Radius versehen. Abschließend wird die Deckschicht durch einen ca. einstündigen Einbrennvorgang bei 220-250 °C ausgehärtet.

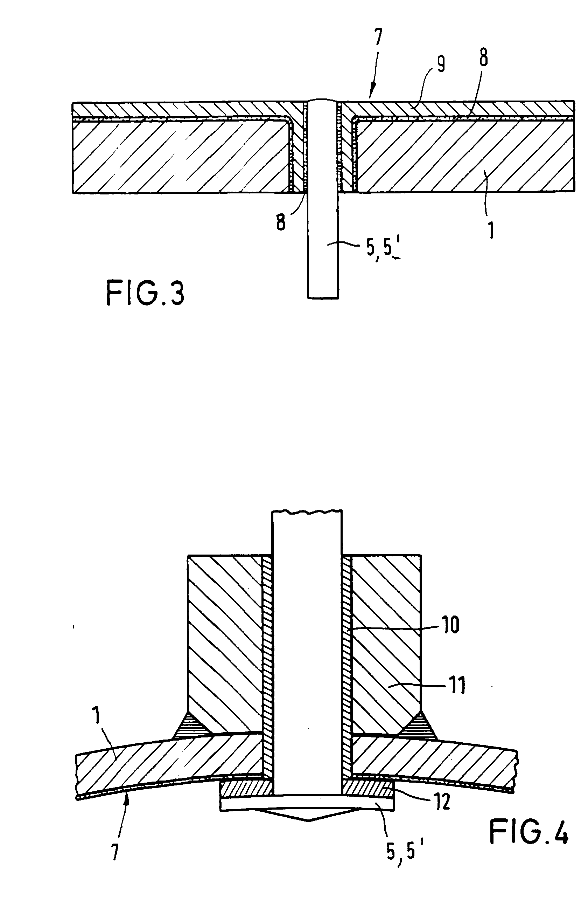

Fig. 3 zeigt eine Ausführungsform einer Elektrodendurchführung, bei der die stabförmigen Elektroden 5,5' in Ausnehmungen der Rohrwand sitzen und durch die Deckschicht 9 in der Meßrohrausnehmung zentrisch fixiert, elektrisch isoliert und abgedichtet sind. Zur Verbesserung der Haftung sollte die Trägerschicht auch auf den Elektroden 5,5' aufgebracht sein.

Der Vorteil dieser Elektrodendurchführung besteht darin, daß die Abdichtung ohne zusätzliches Dichtelement realisiert werden kann. Dies erweist sich gerade bei extremen Betriebsbedingungen, bei denen aggressive Fluide bei hohen Temperaturen und hohen Drücken gemessen werden müssen, als vorteilhaft, da die herkömmlichen Dichtungen hier versagen. Darüber hinaus können auf diese Weise Elektroden in kleinen Rohren abgedichtet und isoliert werden, weil hier eine Zuführung und Abdichtung von innen (vgl. Fig. 4) aus Platzgründen nicht möglich ist.

Fig. 4 zeigt eine weitere Ausführungsform der Elektrodendurchführung. Diese Ausführungsform unterscheidet sich von der Ausführungsform gemäß Fig. 2 dadurch, daß die Elektroden 5,5' durch zylindrische Isolierstücke 10 gegenüber dem Meßrohr elektrisch isoliert sind. Jedes Isolierstück wird von einem aufgeschweißten Ansatzstück 11 fixiert. Die von innen eingesetzte Elektrode ist durch Verpressen einer Flachdichtung 12 abgedichtet. Die hierzu notwendigen Kräfte werden z.B. durch Tellerfederelemente aufgebracht, um Setzverluste des Dichtungswerkstoffs und Temperaturschwankungen auszugleichen. Die Duplex-Schicht reicht bei dieser Elektrodendurchführung nicht in die Rohrausnehmung hinein.

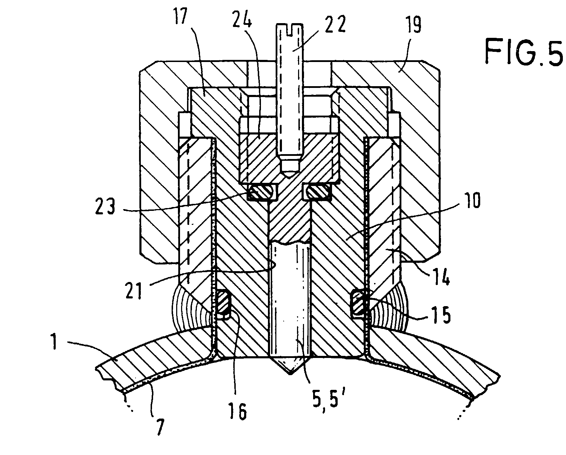

Fig. 5 zeigt ein weiteres Ausführungsbeispiel einer Elektrodendurchführung, bei der die Elektroden 5,5' von außen austauschbar montiert sind. Das Isolierstück 10 zur Aufnahme der Elektroden 5,5' ist in ein zylindrisches Ansatzstück 14 eingesetzt, das mit dem Meßrohr 1 verschweißt ist. Die aufgebrachte Duplex-Schicht 7 reicht bei dieser Variante in die Rohrausnehmung und das Ansatzstück 14 hinein. Die Abdichtung des Isolierstücks 10 gegenüber dem Ansatzstück 14 erfolgt durch einen O-Ring 15, der in einer Nut 16 des Isolierstücks 10 sitzt. Das Isolierstück 10 stützt sich mit dem Flansch 17 an dem freien Ende des Ansatzstücks 14 ab und wird von einer Überwurfmutter 19 gehalten, die auf das Ansatzstück 14 aufgeschraubt ist. Das Isolierstück 10 weist eine zentrale Bohrung 21 zur Aufnahme der Elektrode 5,5' mit der Elektrodenverlängerung 22 auf. Der Elektrodenkopf 24 ist mit einem O-Ring 23 gegenüber dem Isolierstück 10 abgedichtet.

## Patentansprüche

1. Magnetisch-induktiver Durchflußmesser mit einem Meßrohr (1) aus einem metallischen Werkstoff, einem magnetischen Kreis (2), der in dem Meßrohr ein quer zur Längsachse des Meßrohrs gerichtetes Magnetfeld erzeugt und mit mindestens zwei an der Innenwand des Meßrohrs (1) angeordneten Elektroden (5,5'), wobei die Innenwand des Meßrohrs (1) mit einer Trägerschicht (8) versehen ist, auf der eine hiervon verschiedene Deckschicht (9) aufgebracht ist,
**dadurch gekennzeichnet**,
daß die Trägerschicht (8) aus einem korrosionsschützenden und porenschließenden Material auf Phenolharzbasis und die Deckschicht (9) aus einem Material auf Epoxydharzbasis oder Phenolharzbasis besteht.

2. Magnetisch-induktiver Durchflußmesser nach Anspruch 1, dadurch gekennzeichnet, daß die Trägerschicht (8) eine Schichtdicke von 10-20 µm hat.

3. Magnetisch-induktiver Durchflußmesser nach Anspruch 1 oder 2, dadurch gekennzeichnet, daß die Deckschicht (9) eine Schichtdicke von 200-300 µm hat.

4. Magnetisch-induktiver Durchflußmesser nach einem der Ansprüche 1 bis 3, dadurch gekennzeichnet, daß die Deckschicht (9) eine verschmolzene Pulverschicht ist.

5. Magnetisch-induktiver Durchflußmesser nach einem der Ansprüche 1 bis 4, dadurch gekennzeichnet, daß die Elektroden (5,5') in Ausnehmungen der Rohrwand sitzende stabförmige Elektroden sind.

6. Magnetisch-induktiver Durchflußmesser nach Anspruch 5, dadurch gekennzeichnet, daß die Deckschicht (9) die Trennfuge zwischen Elektrode (5,5') und Rohrwand ausfüllt und die Elektroden elektrisch isoliert, abdichtet und fixiert.

7. Magnetisch-induktiver Durchflußmesser nach Anspruch 5, dadurch gekennzeichnet, daß in der Trennfuge zwischen Elektrode (5,5') und Meßrohrwand ein Isolierstück (10) vorgesehen ist, das die Elektroden von der Rohrwand elektrisch isoliert.

8. Magnetisch-induktiver Durchflußmesser nach einem der Ansprüche 1 bis 7, dadurch gekennzeichnet, daß an der Außenwand des Meßrohrs (1) Ansatzstücke (14) vorgesehen sind, in die Isolierstücke (10) zur Aufnahme der Elektroden (5,5') eingesetzt sind.

9. Magnetisch-induktiver Durchflußmesser nach Anspruch 8, dadurch gekennzeichnet, daß sich die aus der Trägerschicht (8) und der Deckschicht (9) bestehende Duplex-Schicht (7) an der Innenwandung der Elektrodenausnehmungen und der Ansatzstücke (14) fortsetzt.

## Claims

1. Magnetoinductive flowmeter comprising a measuring tube (1) made of a metallic material, a magnetic circuit (2) producing in the measuring tube a magnetic field oriented transversally to the longitudinal axis of the measuring tube, and at least two electrodes (5,5') arranged on the inner wall of the measuring tube (1) with the inner wall of the measuring tube (1) being provided with a substrate layer (8) to which a covering layer (9) that is different therefrom is applied,
**characterized in that**
the substrate layer (8) is made of a corrosion-inhibiting and pore-closing material on phenolic resin basis and the covering layer (9) is made of a material on epoxy resin basis or phenolic resin basis.

2. Magnetoinductive flowmeter according to claim 1, characterized in that the substrate layer (8) has a layer thickness of 10 - 20 µm.

3. Magnetoinductive flowmeter according to claim 1 or 2, characterized in that the covering layer (9) has a layer thickness of 200 - 300 µm.

4. Magnetoinductive flowmeter according to one of claims 1 to 3, characterized in that the covering layer (9) is a fused powder layer.

5. Magnetoinductive flowmeter according to one of claims 1 to 4, characterized in that the electrodes (5, 5') are bar-type electrodes arranged in recesses in the tube wall.

6. Magnetoinductive flowmeter according to claim 5, characterized in that the covering layer (9) fills the gap between electrode (5, 5') and tube wall and electrically insulates, seals and fixes the electrodes.

7. Magnetoinductive flowmeter according to claim 5, characterized in that in the gap between electrode (5, 5') and measuring tube wall an isolating piece (10) is provided which electrically insulates the electrodes from the tube wall.

8. Magnetoinductive flowmeter according to one of claims 1 to 7, characterized in that on the outer wall of the measuring tube (1) extension pieces (14) are provided into which insulation pieces (10) for accommodating the electrodes (5, 5') are inserted.

9. Magnetoinductive flowmeter according to claim 8, characterized in that the duplex layer (7) made up of the substrate layer (8) and the covering layer (9) extends along the inner walls of the electrode-accommodating recesses and the extension pieces (14).

## Revendications

1. Débitmètre électromagnétique comportant un tube jaugeur (1) réalisé dans un matériau métallique, un circuit magnétique (2), qui génère, dans le tube jaugeur, un champ magnétique dirigé de manière transversale par rapport à l'axe longitudinal du tube jaugeur, et comportant au moins deux électrodes (5, 5') disposées sur la paroi intérieure du tube jaugeur (1), la paroi intérieure du tube jaugeur (1) étant ainsi dotée d'une couche support (8) sur laquelle est déposée une couche de revêtement (9) différente de ladite couche support, caractérisé en ce que la couche support (8) est réalisée dans un matériau anti-corrosion et bouchant les pores, à base de résine phénolique et en ce que la couche de revêtement (9) est réalisée dans un matériau à base de résine époxy ou de résine phénolique.

2. Débitmètre électromagnétique selon la revendication 1, caractérisé en ce que la couche support (8) a une épaisseur de 10 à 20 µm.

3. Débitmètre électromagnétique selon l'une des revendications 1 ou 2, caractérisé en ce que la couche de revêtement (9) a une épaisseur de 200 à 300 µm.

4. Débitmètre électromagnétique selon l'une des revendications 1 à 3, caractérisé en ce que la couche de revêtement (9) est une couche pulvérulente fondue.

5. Débitmètre électromagnétique selon l'une des revendications 1 à 4, caractérisé en ce que les électrodes (5, 5') sont des électrodes en forme de barre disposées dans des creux de la paroi du tube.

6. Débitmètre électromagnétique selon la revendication 5, caractérisé en ce que la couche de revêtement (9) remplit la fente de séparation existant entre l'électrode (5, 5') et la paroi du tube et isole électriquement les électrodes, les rend étanches et les fixe.

7. Débitmètre électromagnétique selon la revendication 5, caractérisé en ce que dans la fente de séparation entre l'électrode (5, 5') et la paroi du tube jaugeur est disposé un élément isolant (10), qui isole électriquement les électrodes de la paroi du tube.

8. Débitmètre électromagnétique selon l'une des revendications 1 à 7, caractérisé en ce que sur la paroi extérieure du tube jaugeur (1) sont disposés des éléments d'insertion (14) dans lesquelles sont placés les élements isolants (10) pour loger les électrodes (5, 5').

9. Débitmètre électromagnétique selon la revendication 8, caractérisé en ce que la double couche (7) constituée de la couche support (8) et de la couche de revêtement (9) se prolonge sur la paroi intérieure des creux prévus pour les électrodes et des éléments d'insertion (14).
